# EUROPÄISCHE PATENTANMELDUNG

(11) **EP 3 113 310 A1**
(43) Veröffentlichungstag der Anmeldung: **04.01.2017**
(21) Anmeldenummer: 15306027.2
(22) Anmeldetag: 29.06.2015
(51) Int. Cl.: H02G 15/00, G02B 6/36

(54) **ENDENABSCHLUSS FÜR EIN KABEL UND VERFAHREN ZU SEINER HERSTELLUNG**

(71) Anmelder: Nexans, 75008 Paris (FR)
(72) Erfinder: AUE, Volker, 44137 Dortmund (DE); SCHRAMM, Eduard, 30457 Hannover (DE); STÜRMER, Michael, 32584 Löhne (DE)
(74) Vertreter: Feray, Valérie

(57) **Zusammenfassung**

Es wird ein Endenabschluß für ein Kabel angegeben, das in einer Seele mindestens zwei elektrische Kabeladern zur Übertragung von elektrischer Energie und mindestens ein optisches Übertragungselement aufweist und dessen Seele von einer aus Metalldrähten bestehenden Bewehrung umgeben ist. Die Metalldrähte der Bewehrung sind am Ende des Kabels auf einer vorgebbaren Länge entfernt und das Ende der Seele des Kabels ist von einem zugfesten Rohr umgeben, das mit den Enden der Metalldrähte der verbliebenen Bewehrung zugfest verbunden ist. An den Enden der elektrischen Kabeladern sind zum direkten Anschließen von elektrischen Kupplungen geeignete Anschlußgarnituren angebracht, die zumindest teilweise aus dem Rohr herausragen. Am Ende des optischen Übertragungselements ist eine mit einem Teil eines Steckverbinders ausgerüstete Anschlußeinheit angebracht, die ebenfalls zumindest teilweise aus dem Rohr herausragt, und am freien Ende des Rohres ist ein topfartiges Zugelement zugfest angebracht, das die aus dem Rohr herausragenden Teile von Anschlußgarnituren und Anschlußeinheit feuchtigkeitsdicht und druckfest umschließt.

## Beschreibung

Die Erfindung bezieht sich auf einen Endenabschluß für ein Kabel, das in einer Seele mindestens zwei elektrische Kabeladern zur Übertragung von elektrischer Energie und mindestens ein optisches Übertragungselement aufweist und dessen Seele von einer aus Metalldrähten bestehenden Bewehrung umgeben ist sowie auf ein Verfahren zu seiner Herstellung.

Kabel mit einem derartigen Endenabschluß sind beispielsweise dann von Bedeutung, wenn das Kabelende in der Montageposition in einer vorgegebenen Lage festgelegt werden soll. Das ist beispielsweise bei Windkraftanlagen der Fall, die im Offshore-Gebiet im Meer stehen. Solche Anlagen haben in einer Höhe von beispielsweise 20 m bis 50 m über dem Meeresboden eine Plattform, auf welcher neben anderen Vorrichtungen und Aggregaten beispielsweise Transformatoren und Schaltanlagen angeordnet sind. Ein entsprechendes Kabel soll möglichst einfach bis zu einer derartigen Plattform verlegt und gleichzeitig auf derselben festgelegt werden. Die Übertragungselemente des Kabels können dann relativ leicht in bekannter Technik weiterverbunden werden. Ein Verlegeverfahren für ein derartiges Kabel geht beispielsweise aus der EP 2 696 123 A1 hervor. Das Kabel wird bei diesem bekannten Verfahren am Verlegeort an seinem Ende mit einem Ziehstrumpf versehen und mittels eines an demselben angreifenden Zugelements durch ein vormontiertes Rohr bis zu einer Plattform einer Windkraftanlage gezogen, auf welcher es mittels des Ziehstrumpfs festgelegt wird. Über den Aufbau des Kabelendes und insbesondere eines an demselben angebrachten Endenabschlusses sind in der Druckschrift keine Angaben gemacht.

Der Erfindung liegt die Aufgabe zugrunde, den eingangs geschilderten Endenabschluß so zu gestalten, daß das mit demselben bestückte Kabel problemlos bis zur Plattform einer Windanlage verlegt werden kann und daß die Übertragungselemente des Kabels in seiner Montageposition auf einfache Art und Weise weiterverbunden werden können.

Diese Aufgabe wird gemäß der Erfindung dadurch gelöst,
- daß die Metalldrähte der Bewehrung am Ende des Kabels auf einer vorgebbaren Länge entfernt sind,
- daß das Ende der Seele des Kabels von einem zugfesten Rohr umgeben ist, das mit den Enden der Metalldrähte der verbliebenen Bewehrung zugfest verbunden ist,
- daß an den Enden der elektrischen Kabeladern zum direkten Anschließen von elektrischen Kupplungen geeignete Anschlußgarnituren angebracht sind, die zumindest teilweise aus dem Rohr herausragen,
- daß am Ende des optischen Übertragungselements eine mit einem Teil eines Steckverbinders ausgerüstete Anschlußeinheit angebracht ist, die ebenfalls zumindest teilweise aus dem Rohr herausragt, und
- daß am freien Ende des Rohres ein topfartiges Zugelement zugfest angebracht ist, das die aus dem Rohr herausragenden Teile von Anschlußgarnituren und Anschlußeinheit feuchtigkeitsdicht und druckfest umschließt.

Das Kabel ist mit diesem Endenabschluß so konfektioniert, daß seine Übertragungselemente am Montageort ohne wesentlichen Zusatzaufwand mit dort vorhandenen Anlagen elektrisch bzw. optisch leitend verbunden werden können. Dazu können mit Vorteil Steckverbindungen eingesetzt werden, aber auch Schraub- und/oder Klemmverbindungen.

Die Anschlußgarnituren sind mit Vorteil spannungsfest ausgeführt. Sie beinhalten vorzugsweise alle elektrischen Bauteile, die für einen störungsfreien Übergang vom Kabel bzw. von den Kabeladern zu elektrischen Geräten, wie Transformatoren oder Schaltgeräte, erforderlich sind. Die elektrisch leitenden Verbindungen können durch Kupplungen, auch "Kurzkupplungen" genannt, hergestellt werden, die einerseits auf ein aus einer Anschlußgarnitur herausgeführtes Kontaktelement und anderseits an das jeweilige auf der Plattform vorhandene Gerät angeschlossen werden.

Die Anschlußeinheit für das optische Übertragungselement kann als einfacher Steckverbinder für nur einen Lichtwellenleiter oder auch als Verteiler ausgeführt sein, wenn das Übertragungselement zwei oder mehr Lichtwellenleiter umfaßt.

Die Anschlußgarnituren sind im Rohr mit Vorteil so abgestützt, daß sie sich in radialer Richtung nicht bewegen können. Ihre Positionen sind damit fixiert, so daß eine nahezu automatisch durchführbare Kontaktierung möglich ist.

Die Anschlußeinheit ist im Ausgangszustand mit Vorteil oberhalb der Anschlußgarnituren angebracht. Der Durchmesser des Rohres und des Zugelements kann dadurch klein gehalten werden. Sie ist vorzugsweise um eine Achse drehbar im Rohr befestigt, so daß sie für die Kontaktierung in eine geeignete Position gedreht werden kann.

Ein mit einem derartigen Endenabschluß versehenes Kabel kann auf einfache Art und Weise beispielsweise bereits im Herstellerwerk fertig konfektioniert und derart zugfest abgeschlossen werden, daß es am Verlegeort bzw. Montageort ohne zusätzlichen Montageaufwand verlegt und auf einer Plattform befestigt werden kann. Es kann dazu fertig konfektioniert beispielsweise auf einer Spule zum Montageort transportiert werden. Die geschilderte Konfektionierung kann alternativ auch erst am Verlegeort des Kabels durchgeführt werden. Die fertig konfektionierten Übertragungselemente des Kabels können nach dem Entfernen des Zugelements direkt mit auf der Plattform vorhandenen elektrischen Anlagen verbunden werden.

Die Verbindungen zwischen dem Rohr und der Bewehrung einerseits sowie zwischen dem Zugelement und dem Rohr andererseits sind feuchtigkeitsdicht ausgeführt, so daß das ganze Ende des Kabels feuchtigkeitsdicht und druckfest umschlossen ist.

Das die Seele des Kabels umgebende Rohr kann mit Vorteil außen mit Teilen einer Befestigungsvorrichtung ausgerüstet sein, in welche korrespondierende Teile der Befestigungsvorrichtung eingreifen können, die an der Plattform angebracht sind. Das Festlegen des Endes des Kabels an der Plattform ist dadurch besonders einfach. Es kann ohne wesentlichen zusätzlichen Montageaufwand im gleichen Arbeitsgang nach dem Hochziehen des Kabels durchgeführt werden.
Ein Ausführungsbeispiel des Erfindungsgegenstandes ist in den Zeichnungen dargestellt.

Es zeigen:
Fig. 1 schematisch das untere Ende eines Fundaments einer Windkraftanlage.
Fig. 2 eine Ausführungsform des Endverschlusses nach der Erfindung im Schnitt.
Fig. 3 den Endverschluß ohne Zugelement.

Mit 1 ist der untere Teil eines Fundaments einer Windkraftanlage bezeichnet, das auf einem Meeresboden 2 aufgestellt ist, im sogenannten "Offshore-Gebiet". Das Fundament 1 hat eine Plattform 3, die sich beispielsweise etwa 30 m über dem Meeresboden 2 befindet. Auf der Plattform 3 können ein Transformator und eine Schaltanlage sowie auch andere elektrische Geräte angeordnet sein, welche nicht mit dargestellt sind. Sie sind insbesondere elektrisch mit einem an der Spitze der Windkraftanlage angebrachten Generator verbunden.

Durch die Plattform 3 ragt das Ende eines Kabels 4 hindurch, das auf dem Meeresboden 2 aufliegt und bis zur Plattform 3 hochgezogen ist. Das Kabel 4 kann mit seinem freien Ende beispielsweise bis zu einer anderen Windkraftanlage oder zu einer Transformatorstation führen.

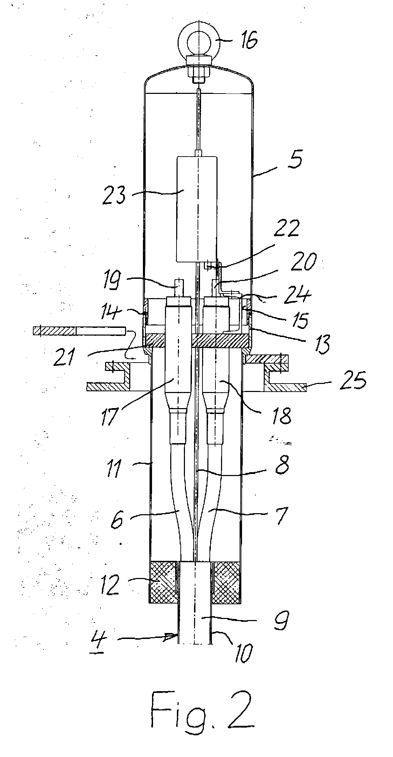

Das Kabel 4 ist gemäß Fig. 2 mit einem Endenabschluß versehen, zu dem auch ein topfartiges Zugelement 5 gehört. Der aus Fig. 2 hervorgehende Endverschluß wird mit Vorteil bereits im Herstellerwerk, in dem das Kabel 4 hergestellt wird, fertiggestellt. Das könnte vor dem Verlegen des Kabels aber auch am Verlegeort durchgeführt werden.

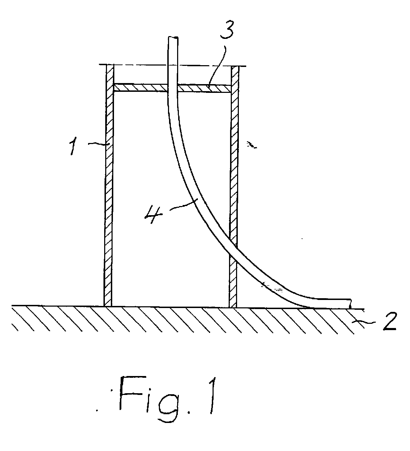

In einer Seele des Kabels 4 sind im dargestellten Ausführungsbeispiel zwei Kabeladern 6 und 7 zur Übertragung von elektrischer Energie und ein optisches Übertragungselement 8 vorhanden. Das Übertragungselement 8 besteht aus mindestens einem Lichtwellenleiter. Vorzugsweise sind es aber mehrere Lichtwellenleiter. Die Kabeladern 6 und 7 sowie das Übertragungselement 8 sind von einem gemeinsamen Mantel 9 aus Isoliermaterial umgeben, über welchem eine aus Metalldrähten, vorzugsweise aus Edelstahl, bestehende Bewehrung 10 angebracht ist. Mantel 9 und Bewehrung 10 sind in Fig. 1 vom Ende des Kabels 4 entfernt, so daß die Kabeladern 6 und 7 und das Übertragungselement 8 frei zugänglich sind.

Die Kabeladern 6 und 7 sowie das Übertragungselement 8 sind von einem zugfesten Rohr 11 umgeben, aus dem sie in Montageposition an einem Ende desselben herausragen. Das vorzugsweise aus Edelstahl bestehende Rohr 11 ist an seinem anderen Ende zugfest mit der Bewehrung 10 verbunden. Die Verbindungsstelle zwischen Rohr 11 und Bewehrung 10 ist durch ein kreuzschraffiertes Kästchen 12 angedeutet. Solche Verbindungen sind an sich bekannt und daher nicht genauer dargestellt.

Am freien Ende des Rohres 11, aus dem die Kabeladern 6 und 7 und das Übertragungselement 8 herausragen, ist das topfartige Zugelement 5 zugfest befestigt. Das kann über ein mit dem Rohr 11 verschweißtes Rohrstück 13 und einen in demselben beispielsweise über eine Schraubverbindung 14 befestigten Ring 15 durchgeführt werden, mit dem das Zugelement 5 verschweißt ist. Das Zugelement 5 hat an seinem freien Ende eine Zugöse 16.

An den beiden Kabeladern 6 und 7 ist je eine spannungsfeste Anschlußgarnitur 17 bzw. 18 angebracht, in die jeweils der elektrische Leiter der entsprechenden Kabelader hineinragt und in denen alle elektrischen Bauteile enthalten sind, die für einen Abschluß einer Kabelader erforderlich sind. Am freien Ende der Anschlußgarnituren 17 und 18 ragt ein Kontaktelement 19 bzw. 20 zum elektrischen Anschluß von Gegenkontakten heraus, beispielsweise von Kupplungen, die zum elektrisch leitenden Verbinden mit den auf der Plattform 3 vorhandenen elektrischen Geräten dienen. Die Anschlußgarnituren 17 und 18 sind mit Vorteil in einer aus Isoliermaterial bestehenden Halteplatte 21 angeordnet, die rundum innen am Rohrstück 13 anliegt. Sie sind dadurch in radialer Richtung abgestützt.

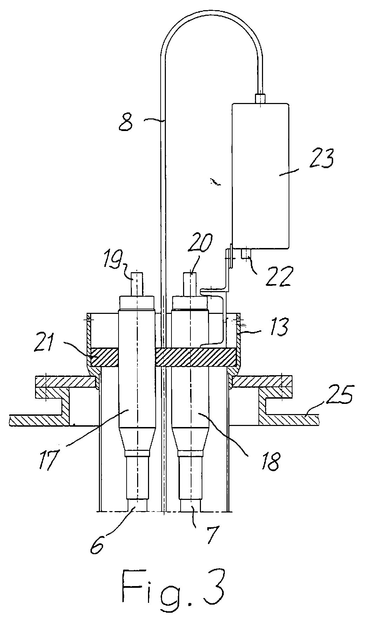

Am Ende des optischen Übertragungselements 8 ist eine mit einem Teil 22 eines Steckverbinders ausgerüstete Anschlußeinheit 23 angebracht, welche zum Anschließen von weiterführenden optischen Übertragungselementen dient. Die Anschlußeinheit 23 ist entsprechend Fig. 2 mit Vorteil in axialer Richtung oberhalb der Anschlußgarnituren 17 und 18 angeordnet, so daß die lichten Abmessungen des Zugelements 5 in radialer Richtung klein gehalten werden können. Sie entsprechen denen des Rohres 11. Die Anschlußeinheit 23 ist mit Vorteil an einem Halter 24 mit einer Drehstelle befestigt, um welche deren Achse sie in eine aus Fig. 3 ersichtliche Position gedreht bzw. geschwenkt werden kann.

Außen an dem Rohr 11 können Teile 25 einer Befestigungsvorrichtung angebracht sein, in welche zur Festlegung des Endenabschlusses auf der Plattform 3 korrespondierende Teile der Befestigungsvorrichtung eingreifen können.

Der Endenabschluß nach der Erfindung wird beispielsweise wie folgt hergestellt und gehandhabt:
Die Bewehrung 10 und der Mantel 9 werden auf einer vorgegebenen Länge vom Ende des Kabels 4 entfernt. An den Enden der Kabeladern 6 und 7 werden dann die Anschlußgarnituren 17 und 18 montiert. Daraufhin wird das Rohr 11 über das Ende des Kabels 4 geschoben und an seinem unteren Ende zugfest mit der verbliebenen Bewehrung 10 verbunden, beispielsweise verschweißt. Am freien Ende des Rohres 11 wird dann das Rohrstück 13 zugfest angebracht, und zwar ebenfalls vorzugsweise durch Schweißen.

Die Anschlußgarnituren 17 und 18 können danach beispielsweise durch Bohrungen der Halteplatte 21 hindurchgeführt werden, welche danach im Rohrstück 13 festgelegt wird.

Danach wird die optische Anschlußeinheit 23 am Ende des optischen Übertragungselements 8 montiert und an dem Halter 24 befestigt. Der Ring 15 wird dann mit dem Rohrstück 13 verschraubt. Abschließend wird das Zugelement 5 aufgebracht und zugfest mit dem Ring 15 verbunden, vorzugsweise durch Schweißen. Der Ring 15 kann auch vor dem Verschrauben mit dem Rohrstück 13 bereits am Zugelement 5 befestigt werden.

Mit dem so fertiggestellten Endenabschluß kann das Kabel 4 bis durch die Plattform 3 gezogen und an bzw. auf derselben festgelegt werden. Das Zugelement 5 kann dann zusammen mit dem Ring 15 durch Lösen der Schraubverbindung 14 vom Rohr 11 abgenommen werden.

Die Anschlußgarnituren 17 und 18 sowie die Anschlußeinheit 23 stehen dann zur direkten Durchverbindung der Übertragungswege zur Verfügung. Die Anschlußeinheit 23 wird dazu zweckmäßig in die aus Fig. 3 ersichtliche Position gedreht, so daß die Kontaktelemente 19 und 20 der Anschlußgarnituren 17 und 18 besser zugänglich sind.

## Patentansprüche

1. Endenabschluß für ein Kabel, das in einer Seele mindestens zwei elektrische Kabeladern zur Übertragung von elektrischer Energie und mindestens ein optisches Übertragungselement aufweist und dessen Seele von einer aus Metalldrähten bestehenden Bewehrung umgeben ist, **dadurch gekennzeichnet,**
- **daß** die Metalldrähte der Bewehrung (9) am Ende des Kabels (4) auf einer vorgebbaren Länge entfernt sind,
- **daß** das Ende der Seele des Kabels (4) von einem zugfesten Rohr (11) umgeben ist, das mit den Enden der Metalldrähte der verbliebenen Bewehrung (9) zugfest verbunden ist,
- **daß** an den Enden der elektrischen Kabeladern (6,7) zum direkten Anschließen von elektrischen Kupplungen geeignete Anschlußgarnituren (17,18) angebracht sind, die zumindest teilweise aus dem Rohr (11) herausragen,
- **daß** am Ende des optischen Übertragungselements (8) eine mit einem Teil eines Steckverbinders (22) ausgerüstete Anschlußeinheit (23) angebracht ist, die ebenfalls zumindest teilweise aus dem Rohr (11) herausragt, und
- **daß** am freien Ende des Rohres (11) ein topfartiges Zugelement (5) zugfest angebracht ist, das die aus dem Rohr (11) herausragenden Teile von Anschlußgarnituren (17,18) und Anschlußeinheit (23) feuchtigkeitsdicht und druckfest umschließt.

2. Endenabschluß nach Anspruch 1, **dadurch gekennzeichnet, daß** die zugfesten Verbindungen zwischen dem Rohr (11) und der Bewehrung (9) einerseits sowie zwischen dem Zugelement (5) und dem Rohr (11) andererseits feuchtigkeitsdicht und druckfest ausgeführt sind.

3. Endenabschluß nach Anspruch 1 oder 2, **dadurch gekennzeichnet, daß** die Anschlußgarnituren (17,18) im Rohr (11) in radialer Richtung abgestützt sind.

4. Endenabschluß nach Anspruch 1 oder 2, **dadurch gekennzeichnet, daß** die Anschlußeinheit (23) an einem Halter (24) befestigt ist.

5. Endenabschluß nach Anspruch 4, **dadurch gekennzeichnet, daß** die Anschlußeinheit (23) drehbar am Halter (24) angebracht ist.

6. Endenabschluß nach Anspruch 1, **dadurch gekennzeichnet, daß** außen an dem Rohr (11) Teile (25) einer Befestigungsvorrichtung zur Festlegung desselben an einer feststehenden Anlage angebracht sind.

7. Endenabschluß nach Anspruch 1, **dadurch gekennzeichnet, daß** am freien Ende des Zugelements (5) eine Zugöse (16) angebracht ist.

## Geänderte Patentansprüche

### Geänderte Patentansprüche gemäss Regel 137(2) EPÜ.

1. Endenabschluß für ein Kabel, das in einer Seele mindestens zwei elektrische Kabeladern zur Übertragung von elektrischer Energie und mindestens ein optisches Übertragungselement aufweist und dessen Seele von einer aus Metalldrähten bestehenden Bewehrung umgeben ist, **dadurch gekennzeichnet,**
- **dass** die Metalldrähte der Bewehrung (10) am Ende des Kabels (4) auf einer vorgebbaren Länge entfernt sind,
- **dass** das Ende der Seele des Kabels (4) von einem zugfesten Rohr (11) umgeben ist, das mit den Enden der Metalldrähte der verbliebenen Bewehrung (10) zugfest verbunden ist,
- **dass** an den Enden der elektrischen Kabeladern (6,7) zum direkten Anschließen von elektrischen Kupplungen geeignete Anschlußgarnituren (17,18) angebracht sind, die zumindest teilweise aus dem Rohr (11) herausragen,
- **dass** am Ende des optischen Übertragungselements (8) eine mit einem Teil eines Steckverbinders (22) ausgerüstete Anschlußeinheit (23) angebracht ist, die ebenfalls zumindest teilweise aus dem Rohr (11) herausragt, und
- **dass** am freien Ende des Rohres (11) ein topfartiges Zugelement (5) zugfest angebracht ist, das die aus dem Rohr (11) herausragenden Teile von Anschlußgarnituren (17,18) und Anschlußeinheit (23) feuchtigkeitsdicht und druckfest umschließt.

2. Endenabschluß nach Anspruch 1, **dadurch gekennzeichnet, dass** die zugfesten Verbindungen zwischen dem Rohr (11) und der Bewehrung (10) einerseits sowie zwischen dem Zugelement (5) und dem Rohr (11) andererseits feuchtigkeitsdicht und druckfest ausgeführt sind.

3. Endenabschluß nach Anspruch 1 oder 2, **dadurch gekennzeichnet, dass** die Anschlußgarnituren (17,18) im Rohr (11) in radialer Richtung abgestützt sind.

4. Endenabschluß nach Anspruch 1 oder 2, **dadurch gekennzeichnet, dass** die Anschlußeinheit (23) an einem Halter (24) befestigt ist.

5. Endenabschluß nach Anspruch 4, **dadurch gekennzeichnet, dass** die Anschlußeinheit (23) drehbar am Halter (24) angebracht ist.

6. Endenabschluß nach Anspruch 1, **dadurch gekennzeichnet, dass** außen an dem Rohr (11) Teile (25) einer Befestigungsvorrichtung zur Festlegung desselben an einer feststehenden Anlage angebracht sind.

7. Endenabschluß nach Anspruch 1, **dadurch gekennzeichnet, dass** am freien Ende des Zugelements (5) eine Zugöse (16) angebracht ist.
